# FASCICULE DE BREVET EUROPEEN

(11) **EP 4 358 069 B1**
(45) Date de publication et mention de la délivrance du brevet: **30.04.2025**
(21) Numéro de dépôt: 23204569.0
(22) Date de dépôt: 19.10.2023
(51) Int. Cl.: G09B 29/10, A63F 3/00, A63F 3/04, A63F 9/24

(54) **SYSTÈME DE REPRÉSENTATION D'UNE ZONE GÉOGRAPHIQUE COMPRENANT UN RELIEF ET ENSEMBLE COMPRENANT UN TEL SYSTÈME DE REPRÉSENTATION**
SYSTEM ZUR DARSTELLUNG EINES GEOGRAPHISCHEN BEREICHS MIT EINEM RELIEF UND ANORDNUNG MIT SOLCH EINEM ANZEIGESYSTEM
SYSTEM FOR REPRESENTING A GEOGRAPHICAL AREA COMPRISING A RELIEF AND ASSEMBLY COMPRISING SUCH A REPRESENTATION SYSTEM

(30) Priorité: 20.10.2022 FR 2210857
(43) Date de publication de la demande: 24.04.2024
(73) Titulaire: THALES, 92190 Meudon (FR)
(72) Inventeur: NEGRET, Jean-Michel, 78140 VELIZY-VILLACOUBLAY (FR)
(74) Mandataire: Lavoix

(56) Documents cités:
- EP-A2- 3 048 791
- WO-A1-2020/249639
- CH-A2- 712 678
- KR-A- 20130 071 100
- US-A- 6 145 424
- US-A1- 2013 217 496
- US-A1- 2015 193 964
- US-A1- 2021 394 043
- US-B1- 6 257 575

## Description

La présente invention concerne un système de représentation en relief d'une zone géographique, par exemple dotée d'un ensemble d'objets.

L'invention concerne en outre un ensemble de représentation comprenant d'une part un tel système de représentation en relief, et d'autre part au moins un dispositif de projection configuré pour projeter, sur le relief, une série d'images, ainsi que par exemple au moins un dispositif de pointage et commande.

Des systèmes de représentation de cartes géographiques sont connus. Par exemple, de tels systèmes sont réalisés sous forme de table comprenant une surface plane pour l'affichage numérique de la carte géographique. Par un affichage spécifique et/ou en utilisant des lunettes 3D ou autre casque immersif, il est possible d'obtenir une vue tridimensionnelle d'une telle carte. Dans l'exemple d'un système de représentation sous forme de table, des utilisateurs situés autour de la table utilisent alors des lunettes 3D ou casques pour obtenir une telle vue tridimensionnelle.

Toutefois, l'utilisation de telles lunettes 3D n'est pas toujours aisée pour l'utilisateur. En particulier, il n'est pas toujours facile de mettre en œuvre un travail collaboratif en utilisant la carte en présence des lunettes 3D, d'autre part les utilisateurs éprouvent souvent une fatigue visuelle à les porter.

De plus, lorsqu'on recourt à un simple plan d'affichage avec un écran 2D, la compréhension de la troisième dimension est limitée. Par exemple, des points hauts, ou des parties de terrain masquées d'un point de vue donné ne sont pas pris en compte. Un but de l'invention est ainsi de pallier ces inconvénients.

En particulier, un but de l'invention est d'obtenir un système de représentation d'une zone géographique qui permet d'obtenir une bonne perception de la zone géographique en trois dimensions.

US2013217496A1 et US2021394043A1 donnent des exemples de système de représentation d'une zone comprenant un relief selon la troisième dimension.

Aussi, un but de l'invention est d'obtenir un système de représentation qui est facilement adaptable à une situation géographique, une zone géographique ou une carte géographique donnée, tout en comprenant un nombre réduit de pièces mécaniques.

À cet effet, l'invention a pour objet un système de représentation d'une zone géographique comprenant un relief selon la revendication 1.

Le système de représentation comprend en outre au moins un actuateur et un dispositif de positionnement configuré pour positionner l'actuateur par rapport aux éléments mobiles dans un plan de positionnement perpendiculaire à la direction d'élévation, l'actuateur étant configuré pour déplacer successivement au moins certains des éléments mobiles parmi la pluralité d'éléments mobiles selon la direction d'élévation.

En effet, le système de représentation permet d'obtenir une bonne perception en trois dimensions d'une zone géographique comprenant un relief grâce aux éléments mobiles, qui sont par exemple des « voxels » (mot composé du mot « vo » de « volume » et « xel » de « pixel », le mot « pixel » étant une contraction des termes anglais « picture » (pour image) et « element » (pour élément)).

De plus, le système de représentation permet d'adapter facilement le relief de la zone géographique. Ainsi, une zone géographique quelconque qui comprend un relief est affichée par le système de représentation avec le relief correspondant.

Par ailleurs, le système de représentation permet d'obtenir une perception tridimensionnelle de la zone géographique sans utilisation de lunettes 3D.

Aussi, l'adaptation à une zone géographique donnée, et en particulier au relief de cette zone géographique, est particulièrement simple grâce au système de représentation comprenant l'actuateur configuré pour déplacer successivement au moins certains des éléments mobiles pour former le relief.

Grâce au dispositif de positionnement, un seul actuateur (ou un nombre faible d'actuateurs), permet(tent) de déplacer successivement les différents éléments mobiles ou « voxels » selon la direction d'élévation. Selon un exemple, un seul actuateur est capable de déplacer successivement l'ensemble des « voxels » selon la direction d'élévation. Ainsi, le système de représentation selon l'invention permet de ne pas prévoir des actuateurs pour chaque élément mobile.

Par conséquent, le système de représentation présente un nombre réduit d'éléments mécaniques, en particulier un nombre faible d'actuateurs pour le déplacement des éléments mobiles. Cela rend le système de représentation peu complexe mécaniquement, tout en permettant d'adapter le relief facilement à une situation géographique donnée.

Suivant d'autres aspects avantageux de l'invention, le système de représentation comprend une ou plusieurs des caractéristiques des revendications 2 à 8.

L'invention a aussi pour objet un ensemble de représentation selon la revendication 9.

Suivant un aspect avantageux de l'invention, l'ensemble de représentation comporte les caractéristiques de la revendication 10.

Ces caractéristiques et avantages de l'invention apparaîtront à la lecture de la description qui va suivre, donnée uniquement à titre d'exemple non limitatif et faite en référence aux dessins annexés, sur lesquels :
- [Fig 1] la figure 1 est une vue schématique en perspective d'un ensemble de représentation comprenant un système de représentation selon l'invention ;
- [Fig 2] la figure 2 est une vue schématique en perspective d'une partie du système de représentation de la figure 1 ;
- [Fig 3] la figure 3 est une représentation schématique en perspective d'une partie du système de représentation de la figure 1 comprenant un dispositif de positionnement ;
- [Fig 4] la figure 4 est une vue schématique d'une partie du dispositif de positionnement de la figure 3 ;
- [Fig 5] La figure 5 est une vue schématique en coupe verticale d'une partie du système de représentation de la figure 1 comprenant plusieurs éléments mobiles, dont un est visible sur la figure 5, et un actuateur configuré pour déplacer cet élément mobile ;
- [Fig 6] la figure 6 est une vue schématique en coupe verticale d'une partie du système de représentation de la figure 1 comprenant un mécanisme électromagnétique configuré pour forcer les éléments mobiles dans une position de repos ;
- [Fig 7] la figure 7 est un ordinogramme d'un procédé d'interaction mis en œuvre par l'ensemble de la figure 1.

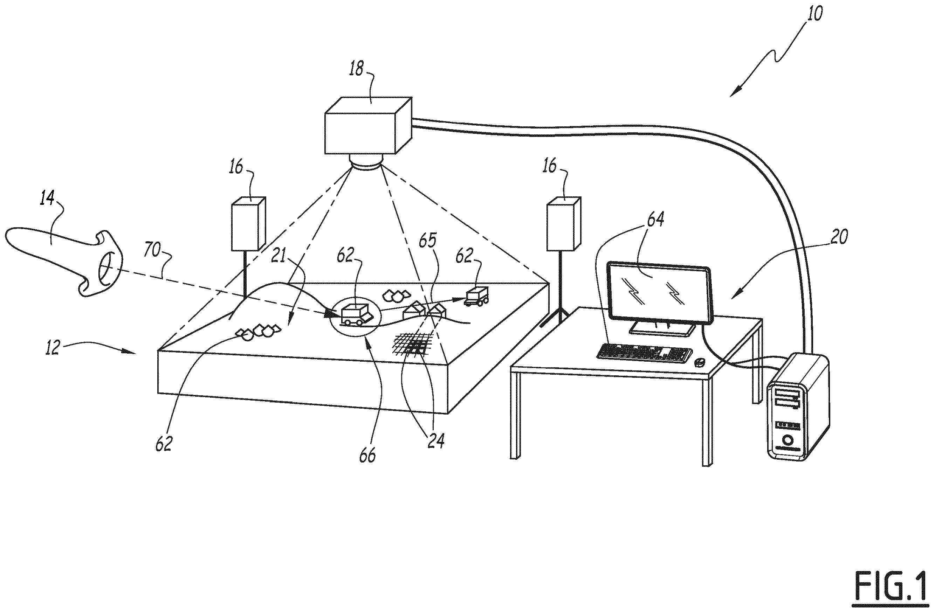

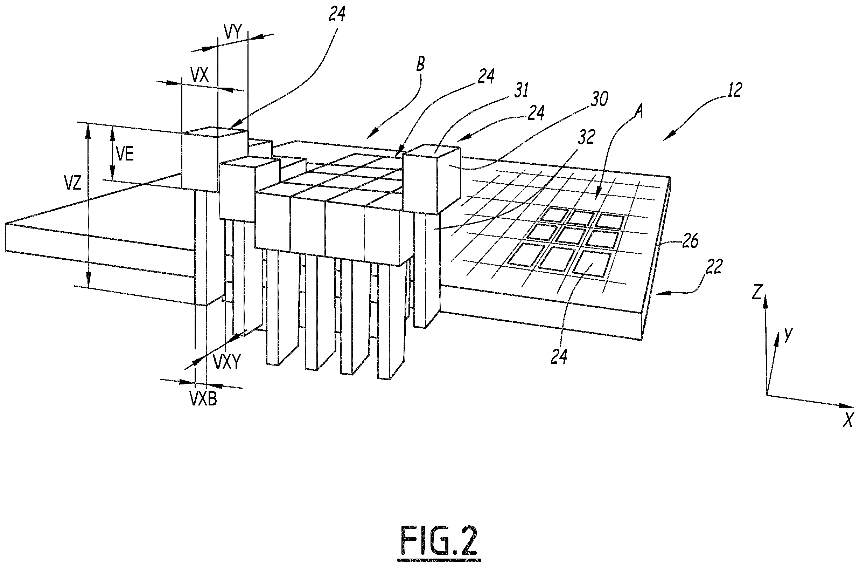

En référence aux figures 1 et 2, un ensemble de représentation 10 comprend un système de représentation 12, au moins un dispositif de pointage et commande 14, par exemple au moins deux bornes de détection 16 de la position et de l'orientation du dispositif de pointage et commande 14, au moins un dispositif de projection 18 et un contrôleur 20.

Le système de représentation 12 est configuré pour représenter une zone géographique 21 comprenant un relief.

La zone géographique est par exemple une carte géographique. Selon un autre exemple, la zone géographique comprend des éléments urbains tels que des bâtiments.

Par « zone géographique comprenant un relief », il est entendu en particulier une zone géographique présentant trois dimensions.

En référence à la figure 2, le système de représentation 12 comprend un support 22 et une pluralité d'éléments mobiles 24, qui sont mobiles en translation par rapport au support 22 selon une direction d'élévation Z.

La direction d'élévation Z s'étend perpendiculairement à une première direction, appelée direction transversale X dans ce qui suit, et une seconde direction, appelée direction longitudinale Y dans ce qui suit. Lorsque la direction transversale X et la direction longitudinale Y sont orientées horizontalement, la direction d'élévation Z est orientée verticalement.

Par exemple, lorsque le support 22 s'étend dans un plan horizontal, chaque élément mobile 24 est mobile en translation verticale par rapport au support 22.

Par exemple, le système de représentation 12 comprend une table formée par le support 22 et des pieds, non représentés, supportant le support 22.

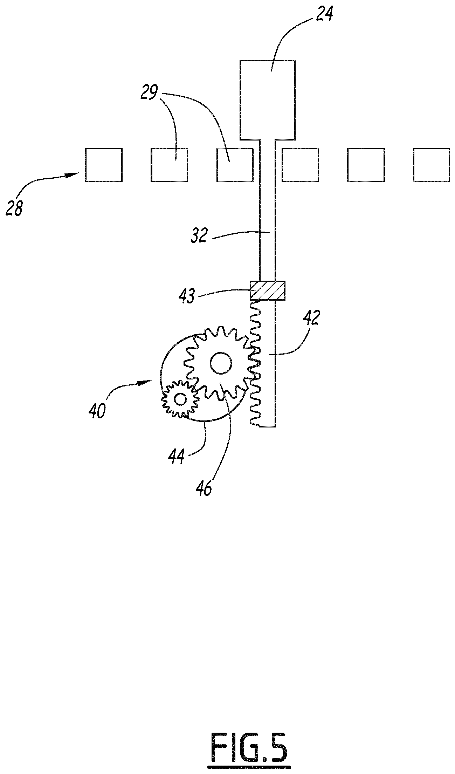

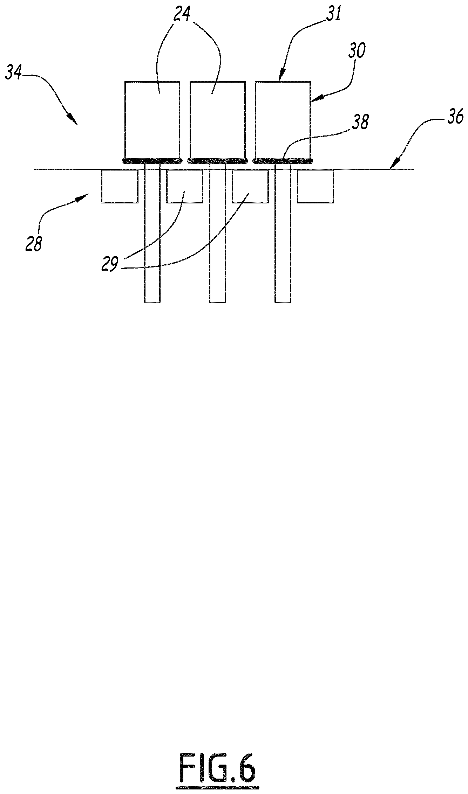

Le support 22 comprend par exemple un cadre 26, dont un exemple est illustré sur la figure 2, et une grille 28, dont un exemple est illustré sur les figures 5 et 6. Le cadre 26 et la grille 28 sont en particulier configurés pour supporter chaque élément mobile 24. Le cadre 26 s'étend de préférence selon la direction transversale X et la direction longitudinale Y. En particulier, la grille 28 s'étend dans un plan perpendiculaire à la direction d'élévation Z. La grille 28 comporte par exemple des poutres 29 s'étendant parallèlement par rapport au cadre 26, notamment selon la direction transversale X et la direction longitudinale Y, de manière à former une grille ayant des poutres disposées perpendiculairement l'une par rapport à l'autre. De préférence, chaque poutre 29 présente une distance identique par rapport à la poutre voisine, de manière à former une grille présentant des ouvertures de taille identique l'une par rapport à l'autre selon la direction d'élévation Z.

Chaque élément mobile 24 forme en particulier un « voxel ».

En référence à la figure 2, chaque élément mobile 24 comprend une tête 30 présentant au moins une face d'affichage 31, formant une partie du relief de la zone géographique 21. Chaque élément mobile 24 comprend par exemple en outre une tige 32 s'étendant à partir de la tête 30, de préférence selon une direction opposée à la direction d'élévation Z. Par exemple, chaque tige 32 traverse la grille 28.

Selon un exemple, chaque élément mobile 24 présente une hauteur VZ sensiblement égale à 200 mm, dont la tête 30 présente une hauteur VE sensiblement égale à 30 mm. Par exemple, chaque tête 30 présente une même taille. Par exemple, chaque tête présente la face d'affichage 31 formant une partie du relief s'étendant dans un plan perpendiculaire à la direction d'élévation Z. Cette face d'affichage 31 présente par exemple une longueur VY et une largeur VX sensiblement égales à 5 mm.

Selon l'exemple, chaque tige 32 présente, dans un plan perpendiculaire à la direction d'élévation Z, une longueur VYB et une largeur VXB sensiblement égales à 3,5 mm.

Chaque élément mobile 24 est de préférence mobile entre une position de repos, dans laquelle chaque élément mobile 24 est positionné à une même hauteur prédéterminée par rapport au support 22 selon la direction d'élévation Z, et une pluralité de positions de saillie distinctes de la position de repos. Par exemple, dans la position de repos, les éléments mobiles 24 adhèrent au support 22.

Par exemple, en référence à la figure 2, les éléments mobiles 24 situés dans une zone A sont en position de repos et les éléments mobiles 24 positionnés dans une zone B sont en position de saillie.

De préférence, chaque élément mobile 24 est en contact par friction avec au moins un élément mobile voisin 24. En particulier, chaque élément mobile 24 est en contact par au moins une face latérale de la tête 30 avec l'élément mobile voisin 24. De préférence, une force de friction entre deux éléments mobiles voisins 24 est supérieure à une force de pesanteur desdits éléments mobiles 24. Cela permet de maintenir le ou chaque élément mobile 24 en position de saillie.

De préférence, chaque élément mobile 24 est fabriqué par fabrication additive.

De préférence encore, le support 22 est fabriqué par fabrication additive. Par exemple, le cadre 26 et la grille 28 sont fabriqués par fabrication additive, de préférence en une seule pièce.

Par exemple, chaque élément mobile 24 et/ou le support 22 est fait d'une matière plastique, en particulier d'une matière plastique rigide et matte.

De préférence, chaque élément mobile 24 est fait d'un même matériau que le support 22.

En référence à la figure 6, le système de représentation 12 comporte par exemple en outre un mécanisme électromagnétique 34 configuré pour forcer l'ensemble des éléments mobiles 24 dans la position de repos. Le mécanisme électromagnétique 34 et en particulier configuré pour forcer l'ensemble des éléments mobiles 24 dans la position de repos simultanément.

Le mécanisme électromagnétique 34 comprend par exemple un filet métallique 36, par exemple un filet de bobinage de cuivre. Le mécanisme électromagnétique 34 comprend par exemple pour chaque élément mobile 24 une base magnétique 38 fixée à la tête 30 de l'élément mobile 24 correspondant, notamment fixée sur une face de la tête 30 faisant face au filet métallique 36. Lorsque le filet métallique 36 reçoit un courant prédéterminé, il se comporte comme un électroaimant et attire chaque base magnétique 38 des éléments mobiles 24 et amène ainsi les éléments mobiles 24 dans la position de repos.

Le système de représentation 12 comprend en outre au moins un actuateur 40 configuré pour déplacer successivement des différents éléments mobiles 24 de la pluralité d'éléments mobiles selon la direction d'élévation Z. En particulier, l'actuateur 40 est configuré pour déplacer l'un des éléments mobiles 24, puis un autre, respectivement selon la direction d'élévation Z.

Par exemple, l'actuateur 40 est configuré pour recevoir une commande de déplacement pour déplacer l'élément mobile 24 concerné selon la direction d'élévation Z, en fonction de données tridimensionnelles du relief, notamment reçues du contrôleur 20 par une liaison de données.

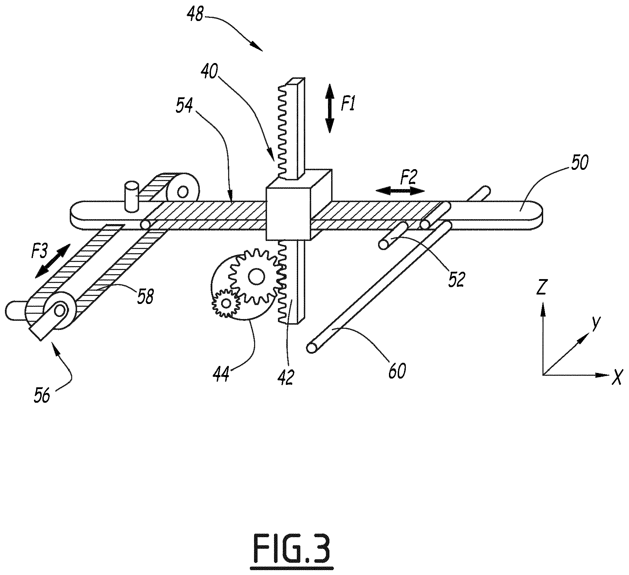

Par exemple, en référence aux figures 3 et 5, l'actuateur 40 comprend une crémaillère 42 configurée pour entrer en contact, optionnellement par l'intermédiaire d'un dispositif d'amortissement 43, avec la tige 32 de l'élément mobile 24 concerné. Le dispositif d'amortissement 43 consiste notamment d'un matériau ayant une dureté plus faible qu'une dureté du matériau de chaque élément mobile 24 et/ou du matériau de la crémaillère 42.

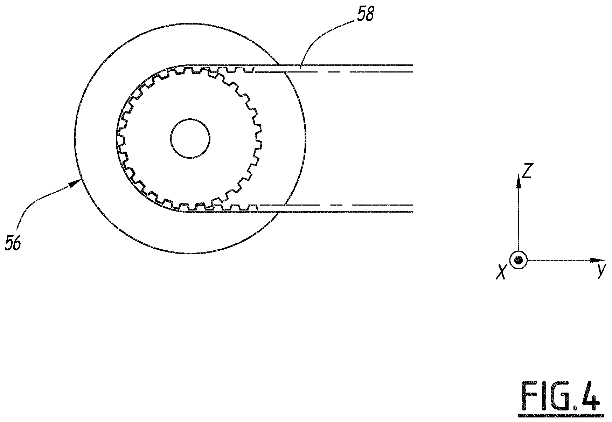

L'actuateur 40 comprend par exemple un moteur d'actuateur 44 comprenant une roue dentée 46. Le moteur d'actuateur 44 est par exemple un moteur électrique. Lorsque le moteur d'actuateur 44 génère une rotation de la roue dentée 46, la crémaillère 42 se déplace en translation, illustré notamment sur la figure 4 par une flèche F1. Lors d'une telle translation, la crémaillère 42 déplace, par contact avec la tige 32, l'élément mobile 24 selon la direction d'élévation Z.

Selon exemple non représenté, l'actuateur 40 est formé par un système pneumatique configuré pour déplacer successivement les différents éléments mobiles 24 de la pluralité d'éléments mobiles selon la direction d'élévation Z.

Le système de représentation 12 comprend en outre un dispositif de positionnement 48 configuré pour positionner l'actuateur 40 par rapport aux éléments mobiles 24 dans un plan de positionnement perpendiculaire à la direction d'élévation Z.

Le plan de positionnement est en particulier défini selon la direction transversale X et la direction longitudinale Y.

Par exemple, le dispositif de positionnement 48 est configuré pour recevoir une commande de positionnement pour positionner l'actuateur 40 dans le plan de positionnement, notamment en fonction des données tridimensionnelles du relief, notamment reçues par une liaison de données adaptée de la part du contrôleur 20.

En référence à la figure 3, le dispositif de positionnement 48 comprend par exemple un bras 50, un premier moteur 52, et une première courroie dentée 54, notamment agencée le long du bras 50. Le bras 50 porte en particulier l'actuateur 40, notamment par l'intermédiaire de la première courroie dentée 54. Le premier moteur 52 est configuré pour déplacer l'actuateur 40 selon la direction transversale X dans le plan de positionnement, en particulier par l'intermédiaire de la première courroie dentée 54. Ce déplacement de la première courroie dentée 54 est par exemple illustré sur la figure 3 par une flèche F2.

Selon un exemple, le dispositif de positionnement 48 comprend en outre un second moteur 56 configuré pour déplacer le bras 50 portant l'actuateur 40 selon la direction longitudinale Y dans le plan de positionnement, en particulier perpendiculairement à la direction transversale X. Dans ce cas, le dispositif de positionnement 48 par exemple une seconde courroie dentée 58 s'étendant selon la direction longitudinale Y.

Par exemple, le second moteur 56 est configuré pour déplacer le bras 50 par l'intermédiaire de la seconde courroie dentée 58. Ce déplacement de la seconde courroie dentée 58 est par exemple illustré sur la figure 3 par une flèche F3.

Selon un exemple, le dispositif de positionnement 48 comprend en outre une barre métallique 60, s'étendant en particulier selon la direction longitudinale Y. En particulier, le bras 50 est porté d'un côté par la seconde courroie dentée 58 et de l'autre côté par la barre métallique 60.

L'actuateur 40 est configuré pour déplacer successivement certains des éléments mobiles 24 parmi la pluralité d'éléments mobiles 24 selon la direction d'élévation Z. En particulier, l'actuateur 40 est configuré pour déplacer l'un des éléments mobiles 24 à une première position de l'actuateur 40 dans le plan de positionnement, puis, après repositionnement de l'actuateur 40 par le dispositif de positionnement 48, un autre des éléments mobiles 24 à une seconde position de l'actuateur 40.

L'actuateur 40 est notamment configuré pour déplacer l'élément mobile 24 à une position donnée par rapport au plan de positionnement par déplacement de la tige 32 par le moteur d'actuateur 44.

En particulier, le dispositif de positionnement 48 est configuré pour déplacer l'actuateur 40 par combinaison des mouvements mis en œuvre par le premier moteur 52 et le second moteur 56 dans le plan de positionnement par rapport aux éléments mobiles 24, notamment par déplacement du bras 50 et par déplacement de l'actuateur 40 sur ce bras 50.

Selon un exemple non représenté, le système de représentation 12 comprend plusieurs actuateurs 40. Chaque actuateur 40 est de préférence tel que décrit ci-dessus.

De préférence, le système de représentation 12 comprend un nombre d'actuateurs 40 strictement inférieur au nombre d'éléments mobiles 24 du système de représentation 12. Par exemple, le système de représentation 12 comprend un nombre N d'actuateurs, où N est un nombre de puissance de 2, tel que 2, 4, 8, 16, etc. De préférence, dans ce cas, le système de représentation 12 comprend un dispositif de positionnement 48 respectif pour chaque actuateur 40. Chaque dispositif de positionnement 48 est de préférence tel que décrit ci-dessus.

Par exemple, lorsque le système de représentation 12 comprend plusieurs actuateurs 40, chaque actuateur 40 est configuré pour déplacer respectivement les éléments mobiles 24 de manière successive d'une partie prédéfinie de la pluralité d'éléments mobiles 24, par exemple dans une zone prédéfinie du plan de positionnement. Dans ce cas, le dispositif de positionnement 48 respectif est configuré pour déplacer l'actuateur 40 correspondant dans la zone prédéfinie. De préférence, chaque actuateur 40 est inapte à déplacer les éléments mobiles en-dehors de sa zone prédéfinie.

L'ensemble de représentation 10 comprend de préférence plusieurs dispositifs de pointage et commande 14. Le ou chaque dispositif de pointage et commande 14 est mobile par rapport au système de représentation 12.

Le ou chaque dispositif de pointage et commande 14 est configuré pour pointer sur une position tridimensionnelle du relief du système de représentation 12. Par exemple, le ou chaque dispositif de pointage et commande 14 est configuré pour pointer sur une position présentant au moins un objet 62, et est configuré pour interagir avec cet objet 62 sur le relief de la zone géographique 21, par exemple configuré pour détailler ou modifier des attributs de l'objet 62, afficher une couche spécifique, notamment de la carte géographique, sur le relief ou déplacer l'objet 62.

De préférence, le ou chaque dispositif de pointage et commande 14 est un composant COTS (de l'anglais « Commercial Off The Shelf »).

De préférence, le ou chaque dispositif de pointage et commande 14 est configuré pour émettre un signal non optique, en particulier un signal électromagnétique.

Chaque borne de détection 16 est configurée pour mesurer une position et/ou une orientation du dispositif de pointage et commande 14 par rapport au système de représentation 12.

Chaque borne de détection 16 est de préférence une borne électromagnétique configurée pour recevoir un signal électromagnétique du dispositif de pointage et commande 14 pour obtenir ladite mesure. Dans ce cas, le dispositif de pointage et commande 14 est en particulier configuré pour émettre le signal électromagnétique dans une bande de fréquences détectable par chaque borne de détection 16.

De préférence, l'ensemble de représentation 10 comprend un ou plusieurs dispositifs de projection 18, par exemple deux.

Le ou chaque dispositif de projection 18 est également appelé dispositif de vidéo projection.

Le ou chaque dispositif de projection 18 est configuré pour projeter, sur le relief, une série d'images comprenant plusieurs objets 62.

Les objets 62 à représenter sont fixes ou mobiles par rapport au relief.

Les objets 62 sont par exemple modélisés dans le système de représentation 12 par une combinaison d'images numériques projetées (par exemple rendu de forme, couleur, texture, animation rapide) et d'éléments de relief physiques par les éléments mobiles 24 (par exemple rendu 3D, animation lente).

Le contrôleur 20 comprend par exemple, non représenté, un module de réception, un module de traitement, et un module de sortie. De préférence, le module d'entrée, le module de traitement, et le module de sortie sont chacun réalisés au moins partiellement sous forme d'un logiciel, ou d'une brique logicielle, par exemple stocké dans une mémoire du contrôleur 20 et exécutable par un processeur du contrôleur 20.

Le contrôleur 20 comprend par exemple une base de données, non représentée, dans laquelle sont stockées des données relatives à la zone géographique 21, par exemple des données cartographiques lorsque la zone est une carte géographique.

Le contrôleur 20 est par exemple doté d'une interface homme-machine 64 comprenant par exemple un écran, un clavier et/ou une souris.

Dans ce cas, selon un exemple, le contrôleur 20 est configuré pour recevoir les données via l'interface homme-machine 64, notamment des données cartographiques relatives à la carte géographique, en particulier relatives au relief, et/ou relatives aux objets 62.

Le contrôleur 20 est ainsi configuré pour élaborer la commande de déplacement pour l'actuateur 40 et/ou la commande de positionnement pour le dispositif de positionnement 48 à partir des données cartographiques, et configuré pour émettre cette ou ces commande(s).

L'interface homme-machine 64 par exemple est en outre configurée pour afficher la zone géographique 21 et/ou des données relatives à la zone géographique 21 et les objets 62.

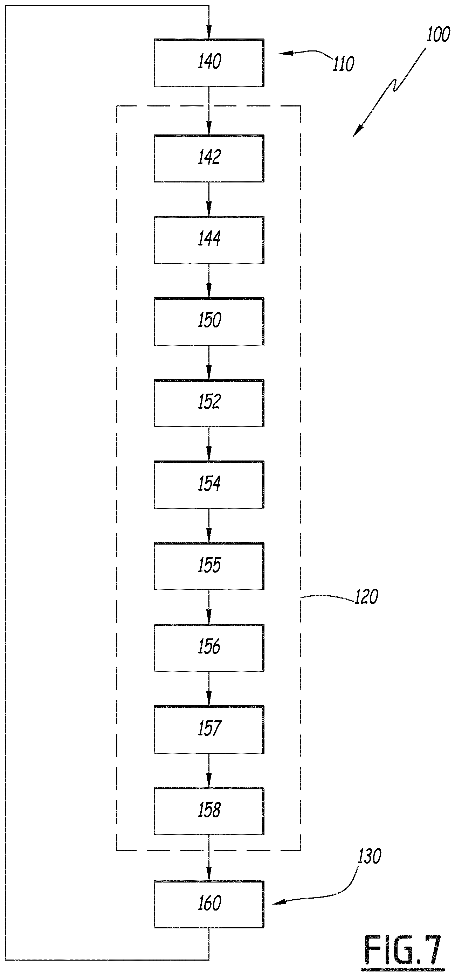

Un procédé d'interaction 100 entre le dispositif de pointage et commande 14 et le système de représentation 12 va maintenant être décrit en référence à la figure 7 comprenant un ordinogramme de ce procédé.

Le procédé d'interaction 100 est au moins partiellement mis en œuvre par le contrôleur 20, c'est-à-dire est au moins partiellement mis en œuvre par ordinateur.

Le procédé d'interaction 100 comprend une phase de mesure 110, une phase de traitement 120, et une phase d'affichage 130.

La phase de mesure 110 comprend au moins une étape de mesure 140 d'une position et d'une orientation du dispositif de pointage et commande 14.

En particulier, lors de l'étape de mesure 140, la ou chaque borne de détection 16, notamment fixe par rapport au système de représentation 12, mesure la position et/ou l'orientation du dispositif de pointage et commande 14. Par exemple, chaque borne de détection 16 échange des données sans fil, de préférence par signal électromagnétique, avec le dispositif de pointage et commande 14 pour obtenir la mesure de la position et/ou de l'orientation de ce dispositif, par exemple selon un protocole d'échange de données prédéterminé, tel qu'un protocole mettant en œuvre un réseau sans fil appelé « Wireless Gigabit (WiGig) », par exemple à une fréquence égale à 60 GHz.

De préférence, l'étape de mesure 140 est mise en œuvre par au moins deux bornes de détection 16, ou trois ou quatre bornes de détection 16.

En particulier, un nombre augmenté de bornes de détection 16 permet de détecter la position et l'orientation de chaque dispositif de pointage et commande 14 situé autour de la table, même en présence d'un utilisateur ou d'un obstacle entre l'une des bornes de détection et le dispositif de pointage et commande 14 correspondant.

Chaque borne de détection 16 transmet un signal comprenant la mesure au contrôleur 20.

La phase de traitement 120 est de préférence mise en œuvre par le contrôleur 20.

La phase de traitement 120 comprend une étape d'acquisition 142, une étape de réception 144, une étape de calcul 150, une étape de détermination 152, une étape d'élaboration 154, une étape d'émission 155, une première étape de réception de commande 156, et une seconde étape de réception de commande 157.

Lors de l'étape d'acquisition 142, le contrôleur 20 acquiert une position de translation de chaque élément mobile 24. Par exemple, le contrôleur 20 reçoit une mesure de la position de translation de la part d'un capteur non représenté.

Selon un autre exemple, le contrôleur 20 obtient chaque position de translation d'une base de données non-représentée. Cette base de données comprend en particulier la position de translation de chaque élément mobile 24 mis à jour comme suite en déplacement récent selon la direction d'élévation Z de cet élément mobile 24.

Selon un autre exemple, le contrôleur 20 obtient chaque position de translation à partir d'un signal de la part du moteur d'actuateur 44.

Par « position de translation », il est entendu la position respective de chaque élément mobile 24 selon la direction d'élévation Z.

Lors de l'étape de réception 144, le contrôleur 20 reçoit la mesure de la position et de l'orientation du ou des dispositif(s) de pointage et commande 14 par rapport au système de représentation 12. En particulier, le contrôleur 20 reçoit le signal comprenant la mesure de la part de la ou des bornes de détection 16, par une liaison de données adaptée.

Lors de l'étape de calcul 150, le contrôleur 20 calcule une ligne virtuelle 70 s'étendant à partir du dispositif de pointage et commande 14.

En particulier, le contrôleur 20 calcule la ligne virtuelle 70 à partir de la position du dispositif de pointage et commande 14 selon la mesure reçue lors de l'étape de réception 144, et à partir de l'orientation du dispositif de pointage et commande 14 selon la mesure reçue lors de l'étape 144.

En particulier, le contrôleur 20 simule un espace tridimensionnel, et calcule dans cet espace la ligne virtuelle 70 en déterminant une équation de droite correspondant à une droite avec la position de la mesure et l'orientation de la mesure.

La ligne virtuelle 70 calculée est ainsi orientée à partir de la position mesurée et selon l'orientation mesurée du dispositif de pointage et commande 14.

L'étape de calcul 150 est une étape optionnelle. Selon un exemple, à la place de l'étape de calcul 150, le contrôleur 20 accède à une base de données pour obtenir une ligne virtuelle pré-calculée en fonction de la position et de l'orientation du dispositif de pointage et commande 14 reçues lors de l'étape de réception 144.

Lors de l'étape de détermination 152, le contrôleur 20 détermine, en fonction de la mesure et de la position de translation de chaque élément mobile 24, une position tridimensionnelle.

La position tridimensionnelle forme une intersection de la ligne virtuelle 70 avec le relief de la zone géographique 21, par exemple avec la tête 30, notamment de la face d'affichage 31, de l'un des éléments mobiles 24.

En particulier, le contrôleur 20 détermine la position tridimensionnelle en fonction de l'élément mobile 24 ou des éléments mobiles 24 qui sont traversés par la ligne virtuelle 70.

Par exemple, le contrôleur 20 simule le relief dans l'espace tridimensionnel, et calcule le point d'intersection de la ligne virtuelle 70 (notamment sous forme d'équation de droite) avec le relief simulé.

Lors de l'étape d'élaboration 154, le contrôleur 20 élabore un signal d'affichage en fonction de la position tridimensionnelle pour un affichage d'au moins une image de la zone géographique 21 sur le relief.

Par exemple, l'image comprise dans le signal d'affichage comprend un marquage de la position tridimensionnelle telle que calculée sur le relief.

Selon un exemple, l'image comprend l'objet 62 positionné à la position tridimensionnelle.

En référence à la figure 1, de préférence, l'image comprend plusieurs objets 62.

Selon un exemple, l'étape d'élaboration 154 comprend en outre un calcul de déformation d'image pour obtenir l'image du signal d'affichage, adaptée à la position de translation de chaque élément mobile 24.

En particulier, le contrôleur 20 met en œuvre un traitement d'anamorphose, de préférence lorsque le fort relief et la déformation de la vidéo projection qui en résulte le justifie.

Par exemple, le calculateur 20 déforme et/ou contracte des parties de l'image pour obtenir, sur le relief, l'affichage de l'image de manière non-déformée. En particulier, le contrôleur 20 compense des aberrations dues à la projection sur le relief, qui est non-plane et non-orthogonale à un axe d'un objectif du dispositif de projection 18 correspondant.

En particulier, le contrôleur 20 met en œuvre des agrandissements ou contractions d'images en fonction des positions de translation de chaque élément mobile 24, pour obtenir l'image adaptée à la position de translation de chaque élément mobile 24.

Lors de l'étape d'émission 155, le contrôleur 20 émet le signal d'affichage au ou à chaque dispositif de projection 18 pour l'affichage de l'image comprise dans le signal d'affichage sur le relief.

La première étape de réception de commande 156 et/ou la seconde étape de réception de commande 157 comprend/comprennent des modifications ou interactions avec l'objet 62 qui est pointé par le dispositif de pointage et commande 14. Cet objet 62 pointé est positionné à la position tridimensionnelle.

Lors de la première étape de réception 156, le contrôleur 20 reçoit, de la part du dispositif de pointage et commande 14, une commande d'interaction avec l'objet 62 positionné à la position tridimensionnelle, par exemple comme suite à un appui sur un bouton correspondant sur le dispositif de pointage et commande 14 pour envoyer la commande d'interaction au contrôleur 20.

La commande d'interaction est par exemple au moins un élément de la liste consistant en une modification d'un attribut de l'objet 62 positionné à la position tridimensionnelle, un affichage d'une information de l'objet 62 positionné à la position tridimensionnelle, un marquage de l'objet 62 à la position tridimensionnelle, et un déplacement de l'objet 62 sur le relief.

Par exemple, lorsque la commande d'interaction comprend le déplacement de l'objet 62 sur le relief, l'utilisateur utilise le dispositif de pointage et commande 14 pour déplacer l'objet sur le relief de la position tridimensionnelle à une autre position. Cela est illustré sur la figure 1 par une flèche 65.

Lorsque la commande d'interaction comprend une modification d'une donnée de l'objet 62, par exemple un attribut de l'objet est modifié. Par exemple, lorsque l'objet est un véhicule, une capacité de déplacement ou de communication du véhicule est modifiée par la commande d'interaction.

Selon un exemple, le contrôleur 20 incorpore une telle modification dans le signal d'affichage, pour l'affichage de la donnée modifiée de l'objet 62.

Lorsque la commande d'interaction comprend un marquage de l'objet 62 à la position tridimensionnelle, le contrôleur 20 incorpore par exemple dans le signal d'affichage le marquage de l'objet 62, par exemple un changement de la couleur de l'objet 62, pour l'affichage de l'objet dans cette couleur.

Lors de la seconde étape de réception de commande 157, le contrôleur 20 reçoit une commande d'affichage d'une couche prédéterminée du relief, notamment de la part du dispositif de pointage et commande 14.

Selon un autre exemple de la seconde étape de réception de commande 157, ou en complément, cette étape comprend la réception par le contrôleur 20 d'une commande de marquage de la position tridimensionnelle, notamment de la part du dispositif de pointage et commande 14, par exemple comme suite à une saisie du bouton correspondant sur le dispositif de pointage et commande 14.

Par exemple, en référence à la figure 1, la commande de marquage comprend le marquage sous forme d'un cercle 66 autour de la position tridimensionnelle, en particulier autour de l'objet 62.

En particulier le contrôleur 20 incorpore dans le signal d'affichage le marquage correspondant à la commande de marquage pour l'affichage de ce marquage sur le relief.

Selon un exemple, le procédé d'interaction 100 comprend en outre une étape de programmation 158 de la zone géographique 21.

Par exemple, lors de l'étape de programmation 158, le contrôleur 21 reçoit, notamment par l'interface homme-machine 64, des données relatives à la zone géographique 21, telles que les données cartographiques relatives à la carte géographique.

Le contrôleur 20 élabore la commande de déplacement pour l'actuateur 40 et/ou la commande de positionnement pour le dispositif de positionnement 48 à partir des données relatives à la zone géographique 21, et émet cette ou ces commande(s) lors de l'étape de programmation 158, pour obtenir le relief selon les données reçues, formant la zone géographique 21 en trois dimensions.

Par exemple, le dispositif de positionnement 48 met en œuvre le mouvement correspondant à la commande de positionnement en positionnant l'actuateur 40 en-dessous de l'élément mobile 24 correspondant. Selon un exemple, l'actuateur 40 met en œuvre le mouvement correspondant à la commande de déplacement en déplaçant en translation l'élément mobile 24 correspondant.

De préférence, l'étape de programmation 158 est mise en œuvre au moins une fois préalablement à la mise en œuvre de l'étape de mesure 140 ou de l'étape d'acquisition 142.

La phase d'affichage 130 comprend une étape d'affichage 160 par le ou chaque dispositif de projection 18 de l'image comprise dans le signal d'affichage.

De préférence, l'étape d'affichage 160 est mise en œuvre par au moins deux dispositifs de projection 18. Cela permet d'obtenir l'affichage de l'image sur tous les éléments mobiles 24, et en particulier d'éviter un recouvrement de l'une des faces d'affichage 31 de l'élément mobile 24 correspondant par un autre élément mobile 24 en position de saillie, qui est par exemple agencé entre le dispositif de projection 18 et la face d'affichage 31 correspondante.

Le procédé d'interaction 100 est de préférence mis en œuvre plusieurs fois. De préférence, la phase de mesure 110, la phase de traitement 120, et la phase d'affichage 130 sont mises en œuvre successivement l'une après l'autre.

De préférence, chaque phase 110, 120,130 est mise en œuvre plusieurs fois.

Par exemple, au moins les étapes d'acquisition 142, de réception 144, de détermination 152, et d'élaboration 154 sont mises en œuvre au moins une fois comme suite à une mise en œuvre de l'étape de programmation 158.

Selon un exemple, la phase de mesure 110, la phase de traitement 120, et la phase d'affichage 130 sont mises en œuvre simultanément ou en parallèle.

La phase de mesure 110 est optionnelle. En variante, le contrôleur 20 reçoit la mesure de la position et l'orientation sous forme d'une mesure simulée, par exemple à partir d'une base de données.

L'étape de calcul 150, l'étape d'émission 155, la première étape de réception de commande 156, la seconde étape de réception de commande 157 et/ou l'étape d'affichage 160 est/sont une/des étape(s) optionnelle(s).

Bien entendu, d'autres modes de réalisation peuvent être envisagés.

Par exemple, le procédé 100 est mis en œuvre par plusieurs dispositifs de commande 14.

Par exemple, le procédé d'interaction 100 comprend la réception de la commande de déplacement des éléments mobiles 24 en provenance du dispositif de pointage et commande 14 au lieu d'une saisie par l'interface homme-machine 64. Dans ce cas, par exemple, le dispositif de pointage et commande 14 envoie une commande adaptée au contrôleur 20, et le contrôleur 20 calcule un signal correspondant pour l'actuateur 40 correspondant et/ou pour le dispositif de projection 18.

On conçoit que le procédé d'interaction 100 est particulièrement simple à mettre en œuvre pour un utilisateur, tout en permettant d'obtenir une perception tridimensionnelle effective de la zone géographique 21.

Par exemple, si la position pointée, à savoir la position tridimensionnelle, contient la représentation d'un objet donné 62, et l'utilisateur envoie une commande pour obtenir des détails de cet objet 62, le signal affiché contient le nom de l'objet 62 et ses attributs. Selon un autre exemple, lors d'une modification du relief par une translation des éléments mobiles 24 selon la direction d'élévation Z, la position pointée par le dispositif de pointage et commande 14 est adaptée.

## Revendications

1. Système de représentation (12) d'une zone géographique (21) comprenant un relief, le système de représentation (12) comprenant un support (22) et une pluralité d'éléments mobiles (24) en translation par rapport au support (22) selon une direction d'élévation (Z), chaque élément mobile (24) comprenant une tête (30) présentant au moins une face d'affichage (31) formant une partie du relief, chaque élément mobile (24) étant mobile entre une position de repos, dans laquelle chaque élément mobile (24) est positionné à une même hauteur prédéterminée par rapport au support (22) selon la direction d'élévation (Z), et une pluralité de positions de saillie,
**caractérisé en ce que** le système de représentation (12) comprend en outre au moins un actuateur (40) et un dispositif de positionnement (48) configuré pour positionner l'actuateur (40) par rapport aux éléments mobiles (24) dans un plan de positionnement perpendiculaire à la direction d'élévation (Z), l'actuateur (40) étant configuré pour déplacer successivement au moins certains des éléments mobiles (24) parmi la pluralité d'éléments mobiles (24) selon la direction d'élévation (Z),
et **en ce que** le support (22) comprend une grille (28) configurée pour supporter la tête (30) de chaque élément mobile (24) dans la position de repos, de préférence chaque élément mobile (24) comprenant en outre une tige (32) s'étendant à partir de la tête (30) et traversant la grille (28).

2. Système de représentation (12) selon la revendication 1, comprenant en outre un mécanisme électromagnétique (34) configuré pour forcer l'ensemble des éléments mobiles (24) dans la position de repos.

3. Système de représentation (12) selon l'une quelconque des revendications 1 à 2, dans lequel chaque élément mobile (24) est en contact par friction avec au moins un élément mobile voisin (24), une force de friction étant supérieure à une force de pesanteur dudit élément mobile (24), afin de maintenir ledit élément mobile (24) en position de saillie.

4. Système de représentation (12) selon l'une quelconque des revendications précédentes, dans lequel chaque élément mobile (24) est fabriqué par fabrication additive, de préférence le support (22) étant également fabriqué par fabrication additive.

5. Système de représentation (12) selon l'une quelconque des revendications précédentes, dans lequel l'actuateur (40) est configuré pour recevoir une commande de déplacement pour déplacer l'un des éléments mobiles (24), en fonction de données tridimensionnelles du relief, et/ou
dans lequel le dispositif de positionnement (48) est configuré pour recevoir une commande de positionnement pour positionner l'actuateur (40) dans le plan de positionnement.

6. Système de représentation (12) selon l'une quelconque des revendications précédentes, dans lequel l'actuateur (40) comprend un moteur d'actuateur (44) comprenant une roue dentée (46) et une crémaillère (42) configurée pour déplacer en translation l'un des éléments mobiles (24) de la pluralité d'éléments mobiles (24) lors d'une rotation de la roue dentée (46).

7. Système de représentation (12) selon l'une quelconque des revendications précédentes, dans lequel le dispositif de positionnement (48) comprend un bras (50) doté d'un premier moteur (52) et portant l'actuateur (40), le premier moteur (52) étant configuré pour déplacer l'actuateur (40) selon une première direction (X) dans le plan de positionnement, de préférence par l'intermédiaire d'une première courroie dentée (54).

8. Système de représentation (12) selon la revendication 7, dans lequel le dispositif de positionnement (48) comprend en outre un second moteur (56) configuré pour déplacer le bras (50) portant l'actuateur (40) selon une seconde direction (Y) dans le plan de positionnement perpendiculaire par rapport à la première direction (X), de préférence le second moteur (56) étant configuré pour déplacer le bras (50) par l'intermédiaire d'une seconde courroie dentée (58).

9. Ensemble de représentation (10) comprenant un système de représentation (12) selon l'une quelconque des revendications précédentes, et comprenant en outre au moins un dispositif de projection (18) configuré pour projeter, sur le relief, une série d'images comprenant une pluralité d'objets (62).

10. Ensemble de représentation (10) selon la revendication 9, comprenant en outre au moins un dispositif de pointage et commande (14) mobile par rapport au système de représentation (12), configuré pour pointer sur une position tridimensionnelle du relief présentant au moins un objet de la pluralité d'objets (62) pour interagir avec ledit objet.

## Patentansprüche

1. System zur Darstellung (12) eines geografischen Bereichs (21) mit einem Relief, wobei das Darstellungssystem (12) einen Träger (22) und eine Vielzahl beweglicher Elemente (24) umfasst, die in Bezug auf den Träger (22) in einer Höhenrichtung (Z) translatorisch beweglich sind, wobei jedes bewegliche Element (24) einen Kopf (30) umfasst, der mindestens eine Anzeigefläche (31) aufweist, die einen Teil des Reliefs bildet, wobei jedes bewegliche Element (24) zwischen einer Ruhestellung, in der jedes bewegliche Element (24) in einer gleichen vorgegebenen Höhe in Bezug auf den Träger (22) in der Höhenrichtung (Z) positioniert ist, und einer Vielzahl hervorstehender Positionen beweglich ist,
**dadurch gekennzeichnet, dass** das Darstellungssystem (12) ferner mindestens einen Aktuator (40) und eine Positionierungsvorrichtung (48) umfasst, die ausgelegt ist, um den Aktuator (40) in Bezug auf die beweglichen Elemente (24) in einer Positionierungsebene senkrecht zur Höhenrichtung (Z) zu positionieren, wobei der Aktuator (40) ausgelegt ist, um nacheinander mindestens einige der beweglichen Elemente (24) von der Vielzahl der beweglichen Elemente (24) in der Höhenrichtung (Z) zu bewegen,
und dass der Träger (22) ein Gitter (28) umfasst, das ausgelegt ist, um den Kopf (30) jedes beweglichen Elements (24) in der Ruheposition zu tragen, wobei vorzugsweise jedes bewegliche Element (24) ferner eine Stange (32) umfasst, die sich vom Kopf (30) aus erstreckt und das Gitter (28) durchquert.

2. Darstellungssystem (12) nach Anspruch 1, das ferner einen elektromagnetischen Mechanismus (34) umfasst, der ausgelegt ist, um alle beweglichen Elemente (24) in die Ruheposition zu zwingen.

3. Darstellungssystem (12) nach einem der Ansprüche 1 bis 2, wobei jedes bewegliche Element (24) in Reibekontakt mit mindestens einem benachbarten beweglichen Element (24) steht, wobei eine Reibekraft größer ist als eine Schwerkraft des beweglichen Elements (24), um das bewegliche Element (24) in hervorstehender Position zu halten.

4. Darstellungssystem (12) nach einem der vorhergehenden Ansprüche, wobei jedes bewegliche Element (24) durch additive Fertigung hergestellt ist, wobei vorzugsweise auch der Träger (22) durch additive Fertigung hergestellt ist.

5. Darstellungssystem (12) nach einem der vorhergehenden Ansprüche, wobei der Aktuator (40) ausgelegt ist, um einen Bewegungsbefehl zum Bewegen eines der beweglichen Elemente (24) zu empfangen, abhängig von dreidimensionalen Daten des Reliefs, und/oder
wobei die Positionierungsvorrichtung (48) ausgelegt ist, um einen Positionierungsbefehl zum Positionieren des Aktuators (40) in der Positionierungsebene zu empfangen.

6. Darstellungssystem (12) nach einem der vorhergehenden Ansprüche, wobei der Aktuator (40) einen Aktuatormotor (44) umfasst, der ein Zahnrad (46) und eine Zahnstange (42) umfasst, die ausgelegt ist, um eines der beweglichen Elemente (24) von der Vielzahl beweglicher Elemente (24) bei einer Drehung des Zahnrads (46) translatorisch zu bewegen.

7. Darstellungssystem (12) nach einem der vorhergehenden Ansprüche, wobei die Positionierungsvorrichtung (48) einen Arm (50) umfasst, der mit einem ersten Motor (52) versehen ist und den Aktuator (40) trägt, wobei der erste Motor (52) ausgelegt ist, um den Aktuator (40) in einer ersten Richtung (X) in der Positionierungsebene zu bewegen, vorzugsweise mittels eines ersten Zahnriemens (54).

8. Darstellungssystem (12) nach Anspruch 7, wobei die Positionierungsvorrichtung (48) ferner einen zweiten Motor (56) umfasst, der ausgelegt ist, um den den Aktuator (40) tragenden Arm (50) in einer zweiten Richtung (Y) in der Positionierungsebene senkrecht zur ersten Richtung (X) zu bewegen, wobei der zweite Motor (56) vorzugsweise ausgelegt ist, um den Arm (50) mittels eines zweiten Zahnriemens (58) zu bewegen.

9. Darstellungsanordnung (10), umfassend ein Darstellungssystem (12) nach einem der vorhergehenden Ansprüche und umfassend ferner mit mindestens eine Projektionsvorrichtung (18), die ausgelegt ist, um eine Reihe von Bildern, die eine Vielzahl von Objekten (62) umfassen, auf das Relief zu projizieren.

10. Darstellungsanordnung (10) nach Anspruch 9, die ferner mindestens eine in Bezug auf das Darstellungssystem (12) bewegliche Zeige- und Steuervorrichtung (14) umfasst, die ausgelegt ist, um auf eine dreidimensionale Position des Reliefs zu zeigen, die mindestens ein Objekt von der Vielzahl von Objekten (62) aufweist, um mit dem Objekt zu interagieren.

## Claims

1. A system for representing (12) a geographical area (21) comprising a relief, the representation system (12) comprising a support (22) and a plurality of elements (24) movable in translation with respect to the support (22) according to an elevation direction (Z), each movable element (24) comprising a head (30) presenting at least one display face (31) forming part of the relief, each movable element (24) being movable between a rest position, in which each movable element (24) is positioned at a same predetermined height relative to the support (22) according to the elevation direction (Z), and a plurality of projecting positions,
**characterized in that** the representation system (12) further comprises at least one actuator (40) and a positioning device (48) configured to position the actuator (40) relative to the movable elements (24) in a positioning plane perpendicular to the elevation direction (Z), the actuator (40) being configured to successively displace at least some of the movable elements (24) among the plurality of movable elements (24) according to the elevation direction (Z),
and **in that** the support (22) comprises a grid (28) configured to support the head (30) of each movable element (24) in the rest position, preferably each movable element (24) further comprising a rod (32) extending from the head (30) and through the grid (28).

2. The representation system (12) according to claim 1, further comprising an electromagnetic mechanism (34) configured to force all movable elements (24) into the rest position.

3. The representation system (12) according to any one of claims 1 to 2, wherein each movable element (24) is in frictional contact with at least one adjacent movable element (24), a frictional force being greater than a force of gravity on said movable element (24), in order to maintain said movable element (24) in a projecting position.

4. The representation system (12) according to any one of the preceding claims, wherein each movable element (24) is manufactured by additive manufacturing, preferably the support (22) also being manufactured by additive manufacturing.

5. The representation system (12) according to any one of the preceding claims, wherein the actuator (40) is configured to receive a displacement command to displace one of the movable elements (24), as a function of three-dimensional relief data, and/or
wherein the positioning device (48) is configured to receive a positioning command to position the actuator (40) in the positioning plane.

6. The representation system (12) according to any one of the preceding claims, wherein the actuator (40) comprises an actuator motor (44) comprising a gear wheel (46) and a rack (42) configured to displace in translation one of the movable elements (24) of the plurality of movable elements (24) during rotation of the gear wheel (46).

7. The representation system (12) according to any one of the preceding claims, wherein the positioning device (48) comprises an arm (50) provided with a first motor (52) and carrying the actuator (40), the first motor (52) being configured to displace the actuator (40) according to a first direction (X) in the positioning plane, preferably by means of a first toothed belt (54).

8. The representation system (12) according to claim 7, wherein the positioning device (48) further comprises a second motor (56) configured to displace the arm (50) carrying the actuator (40) according to a second direction (Y) in the positioning plane perpendicular relative to the first direction (X), preferably the second motor (56) being configured to displace the arm (50) by means of a second toothed belt (58).

9. A representation assembly (10) comprising a representation system (12) according to any one of the preceding claims, and further comprising at least one projection device (18) configured to project, onto the relief, a series of images comprising a plurality of objects (62).

10. The representation assembly (10) according to claim 9, further comprising at least one pointing and control device (14) movable relative to the representation system (12), configured to point at a three-dimensional position of the relief presenting at least one object of the plurality of objects (62) to interact with said object.
